# EUROPEAN PATENT SPECIFICATION

(11) **EP 4 056 032 B1**
(45) Date of publication and mention of the grant of the patent: **10.07.2024**
(21) Application number: 21216457.8
(22) Date of filing: 21.12.2021
(51) Int. Cl.: A01K 69/06

(54) **A MULTI-BRANCH BOX NET TRAP**
EINE MEHRZWEIGIGE KASTENNETZFALLE
UN PIEGE A FILET MULTI-BRANCHES

(30) Priority: 08.03.2021 EE 202100012 U
(43) Date of publication of application: 14.09.2022
(73) Proprietor: Lukner, Mait, 94653 Saare maakond (EE)
(72) Inventor: Lukner, Mait, 94653 Saare maakond (EE)
(74) Representative: AAA Patendibüroo OÜ

(56) References cited:
- CN-A- 104 855 326
- CN-U- 202 035 400
- CN-U- 211 607 927
- SU-A1- 1 570 685

## Description

### TECHNICAL FIELD

The present invention relates to the field of fishing gear, more specifically fish traps. A net box trap is the largest trap used for fishing.

### BACKGROUND ART

Existing known solutions include various net box traps, which consist of one guide fence, up to two fish courts, one or several narrowings and one or two trap boxes with open top.

The disadvantage of such solutions is their low catching efficiency due to the use of only single branch of the net box trap.

For example, in the existing solutions, in a wickerwork trap, the trap netting surrounding the trap body is tight, as a result, the fish have little room to move, wherefore they may injure themselves. Fish are packed tightly side by side in the trap box, where the concentration of oxygen is low, which in turn causes a higher number of injured and dead fish.

An invention disclosed in SU1570685A1 relates to a fish trap with trap branches extending radially from a common centre. A pentagonal trap is located at the outer end of each trap branch (guide fence), with trap mouth and wings on the side facing the guide fence. A similarly shaped pentagonal trap structure is located at the end of guide fence facing the common centre of the trap branch. Basically, there are six separate traps, where stakes and tightening cords must be used for retaining the shape of each individual trap, which makes installation of said trap in a water body extremely labour-intensive and difficult.

The solution described in Chinese Utility Model CN211607927U can be considered as the closest prior art to the present invention. Said solution describes a net box trap with three guide fences, a fish court with a zigzag shape, sequentially located narrowings, support frames which shape a trap body and help to retain the shape of the entire structure, trap box, fixed anchors and floats. Furthermore, a luminaire operating with a solar panel is used in the mentioned solution for attracting fish, which is located in the centre of the fish court. The disadvantage of this solution is that additional elements must be used for retaining the shape of the fish court, such as frames, bands, stakes and/or support poles.

Since the shape of the trap body is provided by frames, the trap netting surrounding the trap bodies is tight, there is a little space and low oxygen concentration in the fish bag, resulting in many damaged, injured, or even dead fish, which is another major disadvantage of said solution.

Another major disadvantage is the installation of such a solution with a zigzag-shaped fish court in a water body, which is extremely difficult and labour-intensive. Fish are guided with guide fences and with a small part of the fish court and light, leaving the possibilities of the three traps (fish court-trap body) as whole unused. Further, the use of luminaires causes unacceptable disturbance of the surrounding environment.

### SUMMARY OF INVENTION

In the context of this invention, the term 'float cord' means a cord with braided floats or a cord with floats, where floats are placed on or attached to the cord. The term 'weight cord' means a cord with braided tin weights or other weight elements, or a cord with weights, where weights are placed on a cord or attached to the cord. The objective of the invention is to provide a multi-branch net box trap, which does not comprise additional stiffening structures, such as frames, stakes, or support poles and which would have a smaller number of required anchors at the bottom of a water body, and which, when tightened, takes the desired shape and which enables more efficient fishing, and which minimizes injuring the fish during fishing.

The present invention defined in claim 1 provides a multi-branch net box trap for catching fish comprising at least three individual net box trap branches arranged symmetrically around a common centre, each branch comprising in the trap body a trap mouth and behind said trap mouth at least one narrowing, a trap box and a closure. Two wings with a turned-back distal end part are located on the lateral sides of the trap mouth.

The trap box is intended for collecting the fish and closure is intended for emptying the fish into the boat through the closure of the trap box.

Between the trap bodies of net box trap branches there are guide fences directed in the direction of the common centre and the trap mouths of said net box trap branches are facing the common centre.

A common fish court of the net box trap branches is formed between the wings of the trap mouths', more specifically between the turned-back distal end parts of these wings, said common fish court is open at a bottom and at a top, where the common fish court is divided into equal sections with the internal guide fences originating from the common centre. An anchor for fixing the net box trap at the bottom of a water body is connected to the end of each net box trap branch facing the closure and to the end of each guide fence facing away from the common centre. In other words, the present invention relates to a multi-branch net box trap, wherein the trap body of each net box trap branch, when viewed from above, has basically the shape of an isosceles triangle, the sides of which are formed by a net, which is enveloped by the net at the bottom and at the top from the tip of the branch to the trap mouth, forming a trap box, which contains said trap mouth with a narrowing. There are wings at the ends of the sides of the branches, where the distal end parts of the wings are turned back towards the trap mouth at an angle, and wherein the fish court is formed in front of the trap mouth by said wings.

In a preferred embodiment, the wings with distal end parts turned back towards the trap mouth, continue from the sides of the trap mouth on the same plane as the sides of the trap body, i.e. when viewed from above, the proximal parts of the wings starting from the sides of the trap mouth before the turned-back distal end parts of said wings, form a continuation to the sides of the trap body with the shape of isosceles triangle (i.e. arms of the triangle).

In other embodiments, when viewed from above, the wings, i.e. the proximal parts of the wings starting from the sides of the trap mouth before the turned-back distal end parts of said wings, may be at an angle in relation to the sides of said trap body with the shape of isosceles triangle (i.e. arms of the triangle, when viewed from above), i.e. the proximal parts of said wings located on opposite sides of the trap mouth may be at a larger angle to each other than is the mutual angle between the sides of the trap body.

The three net box trap branches arranged symmetrically around a common centre, at the points, where the distal end parts of said wings continuing from the sides of each branch are turned back towards a trap mouth, every branch is connected respectively at the top part and at bottom part with the connection cords to the points, where the distal end parts of the wings continuing from the sides of the adjacent net box trap branch are turned back towards the respective trap mouth. These connection cords form three input apertures respectively for the common fish court between the points, where the distal end parts of the wings are continuing from the sides of the adjacent net box trap branches are turned back, and said common fish court is formed between said three net box trap branches around the common centre.

The common fish court is divided around the common centre with three internal guide fences into three sections, where each respective internal guide fence is directed away from the common centre and towards the trap mouth between the wings of the respective branch.

There is a guide fence between each of the two branches, where the end of said guide fence is connected respectively to the upper and lower connecting cords of the inlet aperture of the common fish court and said guide fence projects out from the inlet aperture of the common fish court in a direction originating from the common centre.

For balancing the trap body, upper edges of trap body comprise a cord with floats and lower edges of trap body comprise cord with weights. The fish court in each branch of the net box trap and the trap body have the same height.

The ends of the adjacent branches of the net box trap are at the top and bottom mutually connected at their edges with connection cords, where to the central part of the respective upper and lower connecting cord are connected the respective ends of upper and lower edges of the guide fence.

The trap box is enveloped by the trap netting, which in this solution is not stiffened with frames, rods or stakes, but can fall freely, resulting less injuries to the fish than when using of a tightened trap netting.

The upper cords of the trap body, trap mouth, wings, internal guide fences and guide fences have floats, while respective lower cords of the trap body, trap mouth, wings, internal guide fences and guide fences are weight cords or cords with weights.

The above-described net box trap with at least three guide fences provides a highly productive and economic fishing method, enabling to catch more fish from a fishing site, minimizing the number of traps in water bodies, and due to the voluminous trap boxes, fish stay alive and retain excellent quality.

Installation of the multi-branch net box trap provided in the present solution is simple and fast. When installing the net box trap, the three branches of the net box trap automatically take on the correct shape when pulled out of the three ends of the branches, so it is not necessary to use rigid support frames in the trap body. Also, it is not necessary to install additional stakes to the bottom of the water body for retaining the shape of the trap body.

In the present solution, the height of the side wall starts from approximately 1 meter, which means that it can be used starting from the depth of 1 meter as well.

### BRIEF DESCRIPTION OF DRAWINGS

The invention is described below with references to the appended schematic figures, where:
Figure 1 is a top view of a layout of a multi-branch net box trap according to the invention;
Figure 2 is a spatial top view of a multi-branch net box trap according to the invention;
Figure 3 is a spatial top view of a branch of the net box trap viewed from the tip of the branch;
Figure 4 is a spatial top view of a branch of the net box trap viewed from the mouth;
Figure 5 is a top view of a branch of the net box trap;
Figure 6 is the spatial top view of the connection of the tip of branch of the net box trap with an anchor;
Figure 7 is a top view according to Figure 1 showing a layout, connections and tightening of cords of a multi-branch net box trap according to the invention.

### DESCRIPTION OF EMBODIMENTS

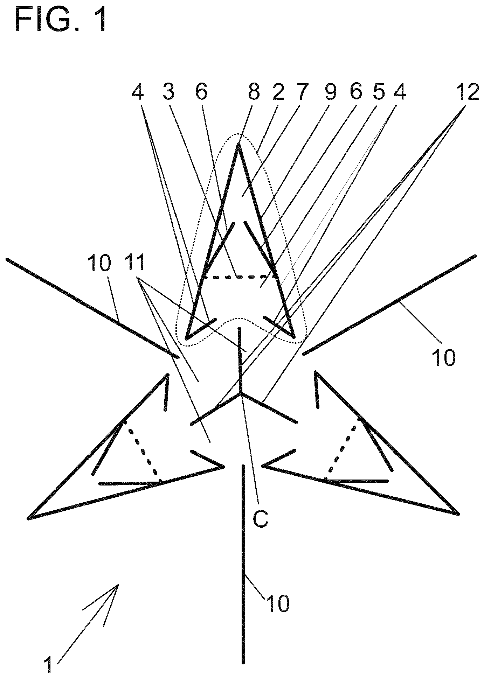

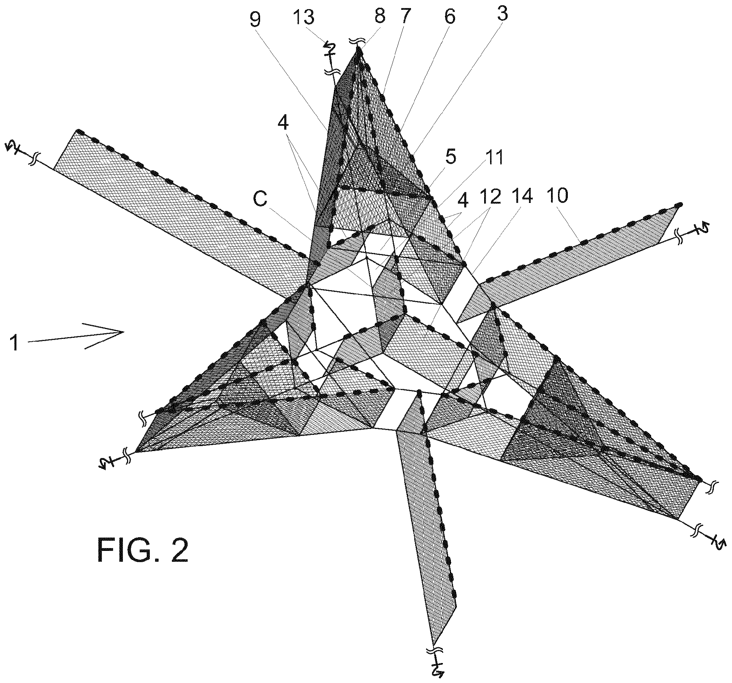

The net box trap according to the invention is described below with references to Figures 1 and 2, where the net box trap 1 comprises several symmetrically located net box trap branches 2 originating in radial direction from common centre C, each net box trap branch 2 comprises a trap mouth 3 and on lateral sides of said mouth two wings 4 having turned-back distal end parts towards the trap mouth 3, in front of the trap mouth 3 between said wings 4, a fish court 5, and behind said trap mouth 3 a narrowing 6, trap box 7 and closure 8.

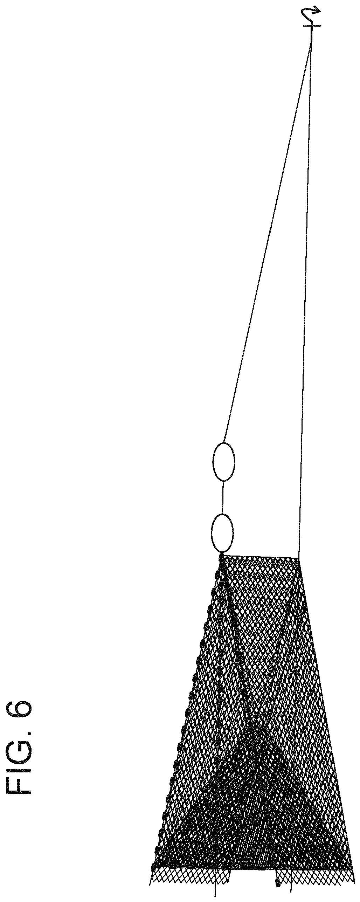

There is a guide fence 10 between each of the two trap bodies 9 of branches 2, said guide fence running in direction away and originating from the common centre C, where the end of said guide fence 10 is connected to the connecting cord 14. Trap mouth 3 of each net box trap branch 2 is facing said common centre C and between the turned-back distal end parts of the wings 4 of said branches 2, a common fish court 11 of said branches 2 is formed, said common fish court is divided with three internal guide fences 12, radiating from the common centre C, into three equal sections. As shown on Figures 2 and 6, an anchor 13 is connected to the tip of each net box trap branch 2 facing the closure 8. As shown on Figure 6, the anchor 13 is connected at the tip of the branch to the upper and lower edges with connection cords, where the upper connection cord has floats, which prevent pulling of the upper edge under water upon tightening of the connection cords.

Also, an anchor 13 is connected to the end at lower part of each guide fence 10 directed away from the common centre C.

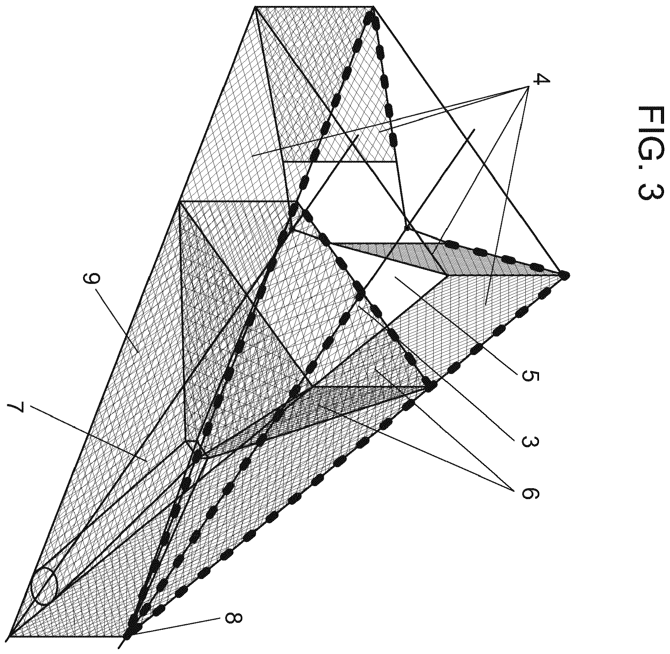

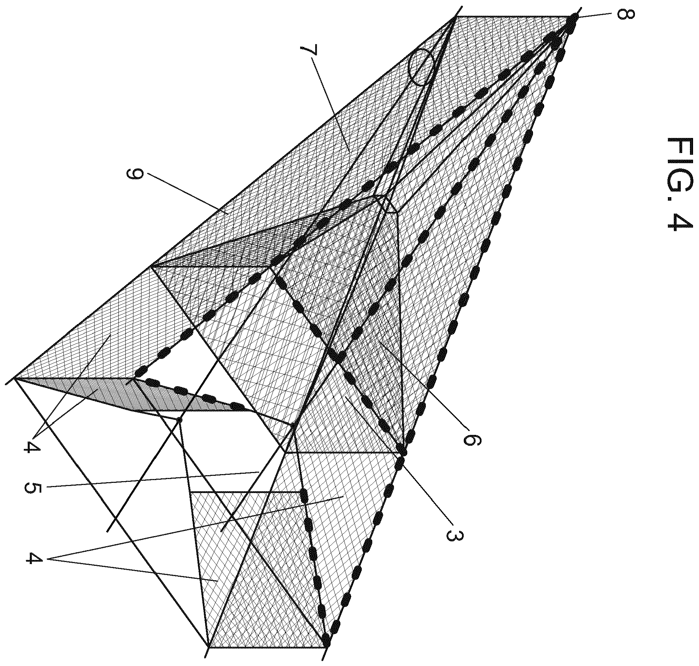

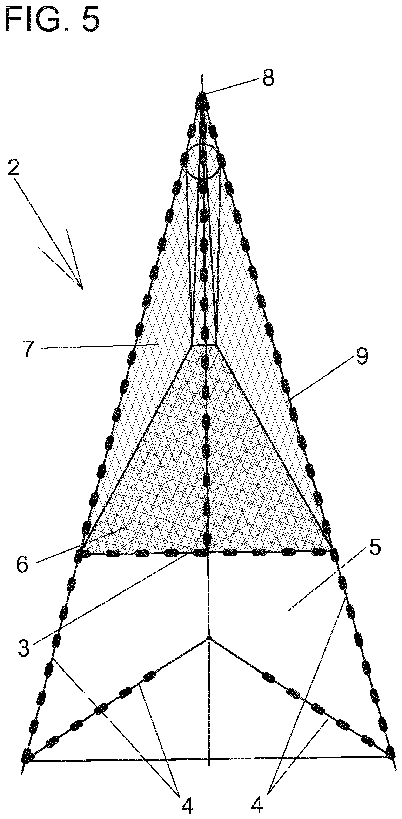

In the embodiments shown in Figures 3, 4 and 5, when viewed from above, the trap body 9 of each branch 2 has basically the shape of an isosceles triangle, the arms of which continue as wings 4, where the distal end parts of said wings 4 are turned back toward the trap mouth 3 and where a fish court 5 is formed in front of the trap mouth 3 between said wings 4, where towards the tip of the trap body, when viewed from the common centre C, said court is followed by trap mouth 3 and narrowing 6.

Narrowing 6 is a channel with substantially convergent cross section formed by a net, said narrowing opens into the trap box 7 located behind it. The aperture of narrowing 6 opening into the trap box 7 is kept in its place in the trap box 7 with cords - a stiffening frame is not used.

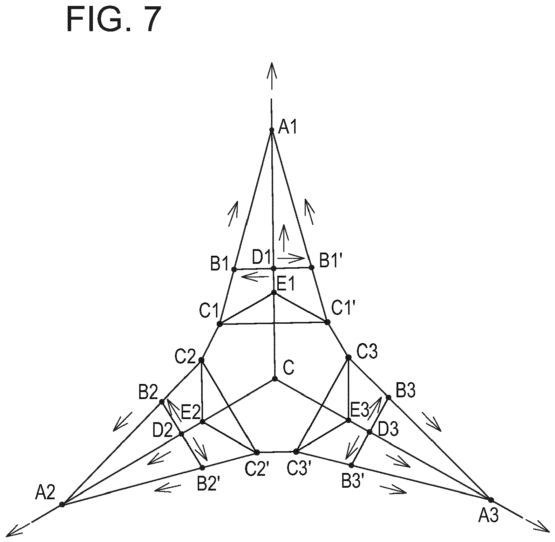

As a further explanation of Figure 7, it should be mentioned, that the upper and lower cords are not shown separately, since the arrangement, connections and tightening of the upper and lower cords of the box trap at the top and bottom are the same.

Referring to Figure 7, the cords A1-B1 (A2-B2, A3-B3) and A1-B1' (A2-B2', A3-B3') at the upper edges of the trap body 9 and a cord B1-B1' (B2-B2', B3-B3') at the upper edge of the trap mouth 3 have floats. There are also floats in the part of wings 4 with the net of the cords B1-C1-E1 and B1'-C1'-E1 (B2-C2-E2 and B2'-C2'-E2, and B3-C3-E3 and B3'-C3'-E3) - in the turned-back distal end part of the wings near the point E1, a gap remains between the ends of distal end parts of the wings 4, through which fish can enter into the fish court 5 located in front of the trap mouth 3. Furthermore, a cord running from a tip A1 (A2, A3) of the branch to the common centre C in the section A1-D1 (A2-D2 and A3-D3), i.e., in the part of the trap body 9 covered with net up to the trap mouth 3, is equipped with floats.

There are also floats on the length of the mentioned cords C-E1, C-E2, C-E2 from the common centre C, where internal guide fences 12 are suspended. Floats on the cords are shown on Figures 2 to 6.

Cord with floats may in this context also mean that it is a float cord, i.e., floats are braided into the cord.

The respective cords running at the lower edges of the trap body 9 are so called weight cords, for example tin cords or cords equipped with separate weights (not shown). The trap body 9 is enveloped at the top and at the bottom with net from the trap mouth 3 to the tip of the trap branch, which forms together with sides of branch 2 said trap box 7.

Fish courts 5 and 11, guide fences 10 and 12, wings 4 and sides of the trap body 9 of branches 2 have similar height.

In the first embodiment, the multi-branch net box trap is placed into a water body without guide fences 10. For installation, the structure is stretched and pulled apart from three tips A1, A2, A3 of the trap box 1.

Pulling from these three tips A1, A2, A3 result in the tightening of outer cords of the trap A1-A2, A1-A3, A2-A3 between tips A1, A2, A3. As a result of this, respective cords B1 -B1', B2-B2' and B3-B3' located at upper and lower edges of the trap mouth 3 are also tightened.

The cords B1-C1-E1 and B1'-C1'-E1 (B2-C2-E2 and B2'-C2'-E2, and B3-C3-E3 and B3'-C3'-E3) located at the upper and lower edges of wing 4 are also tightened. The cords A1-C, A2-C, A3-C running from the tip A1, A2, A3 of each branch 2 of the trap to the common centre C are also tightened, in result of which the common fish court 11 takes the required shape.

When the multi-branch net box trap 1 is tightened and anchors 13 are fixed to the bottom of the water body, guide fences 10 are added between the net box trap branches 2, i.e., the respective ends of upper and lower edges of the guide fence 10 are connected respectively to the centre of the upper and lower connection cords 14 (C1-C2, C1'-C3, C2'-C3' on Figure 7), and anchor 13 at the other end of the guide fence 10 is fixed to the bottom of the water body. Floats at the upper edge of the guide fence 10 and weight rope at the lower edge keep the guide fence 10 in a vertical position.

The cord running at the upper edge of wings 4, outer guide fences 10, trap body 9 and trap mouth 3, and the cord running from top A1, A2, A3 of the trap branch of internal guide fences 12 to the common centre C are equipped with floats, while the cord running at the lower edges of the mentioned parts is a weigh cord (tin cord).

Due to the cord equipped with floats and the weight cord, the parts with the net of the net box trap assume vertical position automatically. As shown on the figures, floats are preferably located in the parts of cords with the net.

In the second embodiment, the multi-branch net box trap 1 is placed into a water body with at least one guide fence 10 pre-fixed to the net box trap 1. Installation of the part of the net box trap 1 with branches 2 is similar to the first embodiment.

After the initial tightening of the net box trap 1 is performed and anchors 13 at the tips of the branches 2 of the net box trap 1 are fixed into the bottom of water body, the remaining guide fences 10 are added between the trap branches 2 and the final tightening is performed. Connection of the remaining guide fences 10 is similar to the first embodiment.

It will be obvious to a person skilled in the art that the present invention is not limited to the embodiments described above and shown in the figures, but other embodiments are feasible within the scope of the appended claims.

### REFERENCE SIGN LIST

- 1: multi-branch net box trap
- 2: net box trap branch
- 3: trap mouth
- 4: wing
- 5: fish court
- 6: narrowing
- 7: trap box
- 8: closure
- 9: trap body
- 10: guide fence
- 11: common fish court
- 12: internal guide fence
- 13: anchor
- 14: connection cord
- C: common centre

## Claims

1. A multi-branch net box trap (1) comprising a plurality of symmetrically arranged individual net box trap branches (2) radially extending from a common centre (C), wherein each net box trap branch (2) comprises a trap body (9) comprising in said trap body (9) a trap mouth (3), followed by a narrowing (6), a trap box (7) and a closure (8), two wings (4) each with a turned-back distal end part on respective lateral sides of said trap mouth (3) and a fish court (5) in front of said trap mouth (3) between said wings (4),
wherein between the trap bodies (9) of the branches (2) of the net box trap (1), there are guide fences (10) running in a direction originating from the common centre (C), and
the trap mouths (3) of the branches (2) of the net box trap (1) are facing the common centre (C), and
a common fish court (11) of the branches (2) is formed between the turned-back distal end parts of the wings (4) of the trap mouths (3) of the branches (2), and said common fish court (11) is divided by internal guide fences (12) originating from the common centre (C) into equal sections,
wherein
the trap body (9) of each branch (2) of the net box trap (1), when viewed from above, has basically the shape of an isosceles triangle, the sides of which are formed by a net, which is from below and above enveloped by a net from the tip of the branch (2) to the trap mouth (3), forming said trap box (7), where the trap mouth (3) comprises a narrowing (6) with convergent cross section opening into the trap box (7) located behind said narrowing (6),
wherein at the ends of the sides of the branches (2) are wings (4), where distal end parts of said wings (4) are turned back towards the trap mouth (3) at an angle, and where the fish court (5) is formed in front of the trap mouth (3) between said wings (4),
wherein the three net box trap branches (2) arranged symmetrically around a common centre (C), at the points where the distal end parts of said wings (4) continuing from the sides of the branches (2) are turned back towards a trap mouth (3), are connected respectively at the top and at the bottom with connection cords (14) to the points
where distal end parts of the wings (4) continuing from the sides of the adjacent net box trap branch (2) are turned back towards a trap mouth (3), thereby forming three input apertures respectively for the common fish court (11) around the common centre (C) between said turned-back points the wings of said adjacent net box trap branches,
wherein said common fish court (11) is divided around the common centre (C) with three internal guide fences (12) into three sections, where each respective internal guide fence (12) is directed from the common centre (C) between the wings (4) of the respective branch (2) towards the trap mouth (3), and
where between each of the two branches (2) to the central part of the upper and lower connecting cord (14) respectively are connected the ends of upper and lower edges of the guide fence (10), said guide fence (10) extending away from the common fish court (11) in a direction originating from the common centre (C).

2. The multi-branch net box trap according to claim 1, **characterized in that** upper edges of the trap body (9) comprise cords with floats or float cords and at lower edges of trap body comprise weight cords or cords with weights.

3. The multi-branch net box trap according to claim 1, **characterized in that** the upper cords of the trap body (9), trap mouth (3), wings (4), internal guide fences (12) and guide fences (10) are cords with floats or float cords, and respective lower cords of the trap body (9), trap mouth (3), wings (4), internal guide fences (12) and guide fences (10) are weight cords or cords with weight.

4. The multi-branch net box trap according to any previous claim, **characterized in that** an anchor (13) is connected to a tip of each net box trap branch (2) on the side of the closure (8).

5. The multi-branch net box trap according to any previous claim, **characterized in that** an anchor (13) is connected to the end of each guide fence (10) facing away from the common centre (C).

6. The multi-branch net box trap according to any previous claim, **characterized in that** it comprises three net box trap branches (2).

7. The multi-branch net box trap according to any previous claim, **characterized in that** the common fish court (11) is open at the top and at the bottom.

8. The multi-branch net box trap according to any previous claim, **characterized in that** the fish court (5) in front of the trap mouth (3) is open at the top and at the bottom.

9. The multi-branch net box trap according to any previous claim, **characterized in that** the fish court (5), wings (4), guide fences (10), internal guide fence (12) and trap body (9) of each branch (2) have the same height.

10. The multi-branch net box trap according to any previous claim, **characterized in that** at the top and at the bottom, the adjacent branches (2) are connected to each other by connecting cords (14) at points, where distal end parts of the wings (4) are turned back, and where to the central part of the upper and lower connecting cord (14) respectively are connected the ends of upper and lower edges of the guide fence (10).

11. The multi-branch net box trap (1) according to claim 1, **characterized in that** proximal parts of wings (4) starting from the sides of the trap mouth (3) before the turned-back distal end parts of said wings, form a continuation of the sides of the trap body (9) with the shape of isosceles triangle.

12. The multi-branch net box trap (1) according to claim 1, **characterized in that** proximal parts of wings (4) starting from the sides of the trap mouth (3) before the turned-back distal end parts of said wings, are at an angle in relation to the sides of the trap body (9) with the shape of isosceles triangle, when viewed above, where the angle between said distal end parts is greater than the mutual angle between the sides of said trap body.

## Patentansprüche

1. Mehrarmige Netzkastenfalle (1) umfassend eine Vielzahl von symmetrisch angeordneten einzelnen Netzkastenfallenarmen (2), die sich radial von einem gemeinsamen Mittelpunkt (C) erstrecken, wobei jeder Netzkastenfallenarm (2) einen Fallenkörper (9) umfasst, der in dem Fallenkörper (9) eine Fallenöffnung (3), gefolgt von einer Verengung (6), einen Fallenkasten (7) und einen Verschluss (8), zwei Flügel (4) mit jeweils einem umgeschlagenen distalen Endteil an jeweiligen lateralen Seiten der Fallenöffnung (3) und einen Fischplatz (5) vor der Fallenöffnung (3) zwischen den Flügeln (4) umfasst,
wobei zwischen den Fallenkörpern (9) der Arme (2) der Netzkastenfalle (1) in einer vom gemeinsamen Mittelpunkt (C) ausgehenden Richtung verlaufende Leitzäune (10) vorhanden sind, und
die Fallenöffnungen (3) der Arme (2) der Netzkastenfalle (1) dem gemeinsamen Mittelpunkt (C) zugewandt sind, und
zwischen den umgeschlagenen distalen Endteilen der Flügel (4) der Fallenöffnungen (3) der Arme (2) ein gemeinsamer Fischplatz (11) der Arme (2) gebildet ist und dieser gemeinsame Fischplatz (11) durch von dem gemeinsamen Mittelpunkt (C) ausgehende innere Leitzäune (12) in gleiche Abschnitte unterteilt ist,
wobei der Fallenkörper (9) jedes Arms (2) der Netzkastenfalle (1) in der Draufsicht im Wesentlichen die Form eines gleichschenkligen Dreiecks aufweist, dessen Seiten von einem Netz gebildet sind, das von unten und oben von einem Netz umhüllt ist, das von der Spitze des Arms (2) bis zur Fallenöffnung (3) den Fallenkasten (7) bildet, wobei die Fallenöffnung (3) eine Verengung (6) mit konvergierendem Querschnitt umfasst, die in den hinter der Verengung (6) befindlichen Fallenkasten (7) mündet,
wobei sich an den Enden der Seiten der Arme (2) Flügel (4) befinden, wobei distale Endteile der Flügel (4) in einem Winkel zur Fallenöffnung (3) umgeschlagen sind, und wobei der Fischplatz (5) vor der Fallenöffnung (3) zwischen den Flügeln (4) gebildet ist,
wobei die drei symmetrisch um einen gemeinsamen Mittelpunkt (C) angeordneten Netzkastenfallenarme (2) an den Stellen, an denen die distalen Endteile der sich von den Seiten der Arme (2) fortsetzenden Flügel (4) zu einer Fallenöffnung (3) umgeschlagen sind, jeweils oben und unten mit Verbindungsschnüren (14) mit den Stellen verbunden sind, an denen distale Endteile der sich von den Seiten des benachbarten Netzkastenfallenarms (2) fortsetzenden Flügel (4) zu einer Fallenöffnung (3) umgeschlagen sind, wodurch jeweils drei Eingangsöffnungen für den gemeinsamen Fischplatz (11) um den gemeinsamen Mittelpunkt (C) zwischen den umgeschlagenen Stellen der Flügel der benachbarten Netzkastenfallenarme gebildet werden,
wobei der gemeinsame Fischplatz (11) um den gemeinsamen Mittelpunkt (C) mit drei inneren Leitzäunen (12) in drei Abschnitte unterteilt ist, wobei jeder jeweilige innere Leitzaun (12) vom gemeinsamen Mittelpunkt (C) zwischen den Flügeln (4) des jeweiligen Arms (2) zur Fallenöffnung (3) gerichtet ist, und
wobei zwischen jedem der beiden Arme (2) und dem mittleren Teil der oberen bzw. unteren Verbindungsschnur (14) die Enden der oberen und unteren Ränder des Leitzauns (10) verbunden sind, wobei sich der Leitzaun (10) von dem gemeinsamen Fischplatz (11) in einer vom gemeinsamen Mittelpunkt (C) ausgehenden Richtung weg erstreckt.

2. Mehrarmige Netzkastenfalle nach Anspruch 1, **dadurch gekennzeichnet, dass** obere Ränder des Fallenkörpers (9) Schnüre mit Schwimmern oder Schwimmschnüre umfassen und untere Ränder des Fallenkörpers Gewichtsschnüre oder Schnüre mit Gewichten umfassen.

3. Mehrarmige Netzkastenfalle nach Anspruch 1, **dadurch gekennzeichnet, dass** die oberen Schnüre des Fallenkörpers (9), der Fallenöffnung (3), der Flügel (4), der inneren Leitzäune (12) und der Leitzäune (10) Schnüre mit Schwimmern oder Schwimmschnüre sind und jeweilige untere Schnüre des Fallenkörpers (9), der Fallenöffnung (3), der Flügel (4), der inneren Leitzäune (12) und der Leitzäune (10) Gewichtsschnüre oder Schnüre mit Gewicht sind.

4. Mehrarmige Netzkastenfalle nach einem vorstehenden Anspruch, **dadurch gekennzeichnet, dass** ein Anker (13) mit einer Spitze jedes Netzkastenfallenarms (2) auf der Seite des Verschlusses (8) verbunden ist.

5. Mehrarmige Netzkastenfalle nach einem vorstehenden Anspruch, **dadurch gekennzeichnet, dass** ein Anker (13) mit dem vom gemeinsamen Mittelpunkt (C) abgewandten Ende jedes Leitzauns (10) verbunden ist.

6. Mehrarmige Netzkastenfalle nach einem vorstehenden Anspruch, **dadurch gekennzeichnet, dass** sie drei Netzkastenfallenarme (2) umfasst.

7. Mehrarmige Netzkastenfalle nach einem vorstehenden Anspruch, **dadurch gekennzeichnet, dass** der gemeinsame Fischplatz (11) oben und unten offen ist.

8. Mehrarmige Netzkastenfalle nach einem vorstehenden Anspruch, **dadurch gekennzeichnet, dass** der Fischplatz (5) vor der Fallenöffnung (3) oben und unten offen ist.

9. Mehrarmige Netzkastenfalle nach einem vorstehenden Anspruch, **dadurch gekennzeichnet, dass** der Fischplatz (5), die Flügel (4), die Leitzäune (10), der innere Leitzaun (12) und der Fallenkörper (9) jedes Arms (2) die gleiche Höhe aufweisen.

10. Mehrarmige Netzkastenfalle nach einem vorstehenden Anspruch, **dadurch gekennzeichnet, dass** die benachbarten Arme (2) oben und unten durch Verbindungsschnüre (14) an Stellen miteinander verbunden sind, an denen distale Endteile der Flügel (4) umgeschlagen sind und an denen mit dem mittleren Teil der oberen bzw. unteren Verbindungsschnur (14) die Enden von oberen und unteren Rändern des Leitzauns (10) verbunden sind.

11. Mehrarmige Netzkastenfalle (1) nach Anspruch 1, **dadurch gekennzeichnet, dass** proximale Teile der Flügel (4), die von den Seiten der Fallenöffnung (3) vor den umgeschlagenen distalen Endteilen der Flügel ausgehen, eine Fortsetzung der Seiten des Fallenkörpers (9) in der Form eines gleichschenkligen Dreiecks bilden.

12. Mehrarmige Netzkastenfalle (1) nach Anspruch 1, **dadurch gekennzeichnet, dass** proximale Teile der Flügel (4), die von den Seiten der Fallenöffnung (3) vor den umgeschlagenen distalen Endteilen der Flügel ausgehen, in der Draufsicht in einem Winkel in Bezug auf die Seiten des Fallenkörpers (9) in der Form eines gleichschenkligen Dreiecks stehen, wobei der Winkel zwischen den distalen Endteilen größer als der gegenseitige Winkel zwischen den Seiten des Fallenkörpers ist.

## Revendications

1. Piège à filet multibranche (1) comprenant une pluralité de branches de piège à filet individuelles agencées symétriquement (2) s'étendant radialement à partir d'un centre commun (C), dans lequel chaque branche de piège à filet (2) comprend un corps de piège (9) comprenant dans ledit corps de piège (9) une embouchure de piège (3), suivie d'un rétrécissement (6), d'une boîte de piège (7) et d'une fermeture (8), deux ailes (4) présentant chacune une partie d'extrémité distale retournée sur des côtés latéraux respectifs de ladite embouchure de piège (3) et une aire de pêche (5) devant ladite embouchure de piège (3) entre lesdites ailes (4),
dans lequel entre les corps de piège (9) des branches (2) du piège à filet (1) se trouvent des clôtures de guidage (10) s'étendant dans une direction partant du centre commun (C), et
les embouchures de piège (3) des branches (2) du piège à filet (1) font face au centre commun (C), et
une aire de pêche commune (11) des branches (2) est formée entre les parties d'extrémité distale retournées des ailes (4) des embouchures de piège (3) des branches (2), et ladite aire de pêche commune (11) est divisée par des clôtures de guidage internes (12) provenant du centre commun (C) en sections égales, dans lequel le corps de piège (9) de chaque branche (2) du piège à filet (1), en vue de dessus, présente fondamentalement la forme d'un triangle isocèle dont les côtés sont formés par un filet, qui est au-dessous et au-dessus enveloppé par un filet depuis la pointe de la branche (2) jusqu'à l'embouchure de piège (3), formant ladite boîte de piège (7), dans lequel l'embouchure de piège (3) comprend un rétrécissement (6) à section transversale convergente débouchant dans la boîte de piège (7) située derrière ledit rétrécissement (6),
dans lequel aux extrémités des côtés des branches (2) se trouvent des ailes (4), dans lequel des parties d'extrémité distale desdites ailes (4) sont retournées vers l'embouchure de piège (3) selon un angle, et dans lequel l'aire de pêche (5) est formée devant l'embouchure de piège (3) entre lesdites ailes (4),
dans lequel les trois branches de piège à filet (2) agencées symétriquement autour d'un centre commun (C), aux points où les parties d'extrémité distale desdites ailes (4) se prolongeant depuis les côtés des branches (2) sont retournées vers une embouchure de piège (3), sont reliées respectivement en haut et en bas par des cordes de liaison (14) aux points où les parties d'extrémité distale des ailes (4) se prolongeant depuis les côtés de la branche de piège à filet (2) adjacente sont retournées vers une embouchure de piège (3), formant ainsi trois ouvertures d'entrée respectivement pour l'aire de pêche commune (11) autour du centre commun (C) entre lesdits points retournés des ailes desdites branches de piège à filet adjacentes,
dans lequel ladite aire de pêche commune (11) est divisée autour du centre commun (C) par trois clôtures de guidage internes (12) en trois sections, où chaque clôture de guidage interne respective (12) est dirigée à partir du centre commun (C) entre les ailes (4) de la branche respective (2) vers l'embouchure de piège (3), et
où entre chacune des deux branches (2) jusqu'à la partie centrale des cordes de liaison supérieures et inférieures (14) respectivement sont reliées les extrémités des bords supérieurs et inférieurs de la clôture de guidage (10), ladite clôture de guidage (10) s'étendant vers l'extérieur depuis l'aire de pêche commune (11) dans une direction à partir du centre commun (C).

2. Piège à filet multibranche selon la revendication 1, **caractérisé en ce que** les bords supérieurs du corps de piège (9) comprennent des cordes avec des flotteurs ou des cordes flottantes et les bords inférieurs du corps de piège comprennent des cordes de poids ou des cordes avec des poids.

3. Piège à filet multibranche selon la revendication 1, **caractérisé en ce que** les cordes supérieures du corps de piège (9), de l'embouchure de piège (3), des ailes (4), des clôtures de guidage internes (12) et des clôtures de guidage (10) sont des cordes avec des flotteurs ou des cordes de flotteurs, et les cordes inférieures respectives du corps de piège (9), de l'embouchure de piège (3), des ailes (4), des clôtures de guidage internes (12) et des clôtures de guidage (10) sont des cordes de poids ou des cordes avec poids.

4. Piège à filet multibranche selon une quelconque revendication précédente, **caractérisé en ce qu'**une ancre (13) est reliée à une pointe de chaque branche de piège à filet (2) du côté de la fermeture (8).

5. Piège à filet multibranche selon une quelconque revendication précédente, **caractérisé en ce qu'**une ancre (13) est reliée à l'extrémité de chaque clôture de guidage (10) opposée au centre commun (C).

6. Piège à filet multibranche selon une quelconque revendication précédente, **caractérisé en ce qu'**il comprend trois branches de piège à filet (2).

7. Piège à filet multibranche selon une quelconque revendication précédente, **caractérisé en ce que** l'aire de pêche commune (11) est ouverte en haut et en bas.

8. Piège à filet multibranche selon une quelconque revendication précédente, **caractérisé en ce que** l'aire de pêche (5) devant l'embouchure de piège (3) est ouverte en haut et en bas.

9. Piège à filet multibranche selon une quelconque revendication précédente, **caractérisé en ce que** l'aire de pêche (5), les ailes (4), les clôtures de guidage (10), la clôture de guidage interne (12) et le corps de piège (9) de chaque branche (2) présentent la même hauteur.

10. Piège à filet multibranche selon une quelconque revendication précédente, **caractérisé en ce qu'**en haut et en bas, les branches adjacentes (2) sont reliées les unes aux autres par des cordes de liaison (14) en des points où les parties d'extrémité distale des ailes (4) sont retournées, et où à la partie centrale des cordes de liaison supérieures et inférieures (14) sont reliées respectivement les extrémités des bords supérieurs et inférieurs de la clôture de guidage (10).

11. Piège à filet multibranche (1) selon la revendication 1, **caractérisé en ce que** les parties proximales des ailes (4) partant des côtés de l'embouchure de piège (3) avant les parties d'extrémité distale retournées desdites ailes, forment un prolongement des côtés du corps de piège (9) en forme de triangle isocèle.

12. Piège à filet multibranche (1) selon la revendication 1, **caractérisé en ce que** les parties proximales des ailes (4) partant des côtés de l'embouchure de piège (3) avant les parties d'extrémité distale retournées desdites ailes, forment un angle par rapport aux côtés du corps de piège (9) en forme de triangle isocèle, en vue de dessus, où l'angle entre lesdites parties d'extrémité distale est supérieur à l'angle mutuel entre les côtés dudit corps de piège.
